# EUROPEAN PATENT APPLICATION

(11) **EP 3 614 054 A1**
(43) Date of publication of application: **26.02.2020**
(21) Application number: 18193078.5
(22) Date of filing: 06.09.2018
(51) Int. Cl.: F24D 17/02, F24F 5/00, F25B 29/00, F24H 4/04

(54) **HOTEL-TYPE NON-OUTDOOR-UNIT REFRIGERATION SYSTEM**

(30) Priority: 21.08.2018 CN 201810955063
(71) Applicant: Shandong Rongan Electronic Science and Technology Co., Ltd., Qingdao Shandong (CN)
(72) Inventor: Liu, Jialou, Qingdao, Shandong (CN)
(74) Representative: Spittle, Mark Charles

(57) **Abstract**

The present invention relates to the technical field of refrigeration, and particularly relates to a hotel-type non-outdoor-unit refrigeration system. The hotel-type non-outdoor-unit refrigeration system includes a refrigeration system and a hotel hot water supply system, the refrigeration system includes a compressor, a refrigeration end of the compressor is connected with a radiator, and a heat dissipation end of the compressor is connected with a heat sink; and the hot water supply system includes a water tank, a booster pump, a water quality purification device and a heater, the heat sink is arranged in the water tank, a tap water inlet pipe and a hot water outlet pipe are arranged on the water tank, the hot water outlet pipe is connected with the booster pump, the booster pump is connected with a water inlet of the water quality purification device, a water outlet of the water quality purification device is connected with the heater, and the heater is connected with use water outlets. According to the invention, the hotel-type non-outdoor-unit refrigeration system is small in engineering quantity, occupies a small space and has a good refrigeration effect; each guest room is independent in water use without affection of an external environment; and the hotel-type non-outdoor-unit refrigeration system is greatly convenient for the water use demands, implements effective utilization and no waste of resources, and is energy-saving and environmental-friendly.

## Description

### FIELD OF THE INVENTION

The present invention relates to the technical field of refrigeration, and particularly relates to a hotel-type non-outdoor-unit refrigeration system which does not require an outdoor unit to carry out heat exchange and is implemented by a compressor.

### BACKGROUND OF THE INVENTION

Currently, refrigeration equipment generally adopted in the market mainly includes various forms of air conditioner and fan equipment, wherein a fan takes away body surface heat mainly by air flowing but cannot reach a refrigeration effect in its true sense. The air conditioner equipment currently generally applies an outdoor unit to carry out heat discharge, which certainly can ensure an indoor temperature effect, but has a serious damage effect on the overall environment and aggravates an urban heat island effect. Particularly, in summer, the urban temperature stays at a high level, and one of the main reasons is heat discharge of the outdoor unit of the air conditioner. Meanwhile, the outdoor unit destroys the integrality of the building external wall, affects the city appearance, and has a certain potential safety hazard. In the installing process of the air conditioner, a lot of energy needs to be spent to specially design an air conditioner well and pipelines; after those pipelines are used all year around, harmful floras will be bred so as to generate serious damage to human bodies; and the repair and replacement work for the pipelines of the air conditioner is also a time-consuming and labor-consuming engineering.

In addition, most of existing hotels adopt a big boiler centralized water supply mode to provide hot water for guest rooms, such water supply mode has the following defects that: (1) heat is provided usually by adopting resources, such as coal or coal gas and the like, and hot water needs to be provided for 24 hours, so that environment quality will be polluted and resource waste will be caused; (2) centralized water supply is easy to cause water quality pollution and pollute water for guest rooms; (3) in the rush hours of hotel water, insufficient supply of hot water is easy to generated; and (4) construction and maintenance cost of a boiler is relatively high. Therefore, currently, the market is in urgent need of a refrigeration system which can reasonably utilize heat generated by refrigeration to hotel hot water supply without the outdoor unit.

### SUMMARY OF THE INVENTION

In order to solve the defects in the prior art, the present invention provides a novel refrigeration system which does not require an outdoor unit to discharge heat joins up a refrigeration system into a hotel engineering and stores redundant heat for kitchen and bath water when implementing indoor refrigeration.

The present invention adopts the technical solution that:
A hotel-type non-outdoor-unit refrigeration system includes a refrigeration system and a hotel hot water supply system connected with the refrigeration system; the refrigeration system includes a compressor, the compressor includes a refrigeration end and a heat dissipation end, the refrigeration end is connected with a radiator, and the heat dissipation end is connected with a heat sink; and the hot water supply system includes a water tank, a booster pump, a water quality purification device and a heater, the heat sink is arranged in the water tank and soaked in water in the water tank, a tap water inlet pipe and a hot water outlet pipe are arranged on the water tank, the hot water outlet pipe is connected with the booster pump, the booster pump is connected with a water inlet of the water quality purification device by a pipeline, a water outlet of the water quality purification device is connected with the heater, and the heater is connected with use water outlets.

Further, the compressor is arranged on an independent damping and noise reduction platform outside a hotel wall.

Further, the radiator is set as an air-cooling type radiator.

Further, the water quality purification device includes a filter and a purifier which are independently arranged and are connected by pipelines.

Further, the heater is set as an electric heater.

Further, the use water outlets include a drinking water outlet and a kitchen and bath water outlet, and the kitchen and bath water outlet can be directly connected with a water outlet of the booster pump by the heater.

The present invention achieves the beneficial effects that:
According to the present invention, refrigeration is carried out by the compressor; indoor cooling is carried out by air circulation; the hotel-type non-outdoor-unit refrigeration system is connected into a hotel indoor waterway engineering; heat is discharged without an outdoor unit; indoor heat which needs to be discharged is absorbed by water to carry out energy conversion and effective utilization for the kitchen and batch or drinking water; any damage to the external environment cannot be caused; and the hotel-type non-outdoor-unit refrigeration system is small in engineering quantity, occupies a small space and has a good refrigeration effect.

Each guest room can be independently supplied with water without affection of the external environment so as to greatly facilitate the water use demands of users; the hotel-type non-outdoor-unit refrigeration system is simple to maintain and low in construction cost; the pipelines are difficult to breed bacteria; and the hotel-type non-outdoor-unit refrigeration system is convenient for the guest rooms to use water. Heat does not need to be released to the outdoor space, so that the hotel-type non-outdoor-unit refrigeration system saves energy, has no pollution, is low in energy consumption, implements effective utilization and no waste of resources, and is energy-saving and environment-friendly.

### BRIEF DESCRIPTION OF DRAWINGS

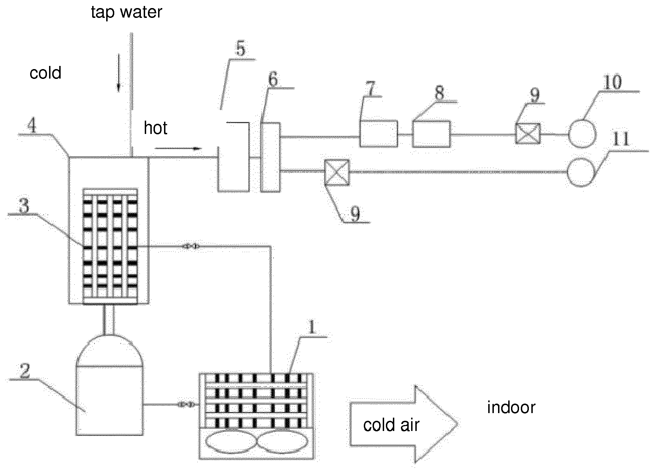

FIG. 1 is a structural schematic diagram of a hotel-type non-outdoor-unit refrigeration system according to the present invention.

Wherein, 1, radiator; 2, compressor; 3, heat sink; 4, water tank; 5, booster pump; 6, water pipe three-way valve; 7, filter; 8, purifier; 9, heater; 10, drinking water outlet; 11, kitchen and bath water outlet.

### DETAILED DESCRIPTION OF THE EMBODIMENTS

In order to facilitate those skilled in the art understanding the present invention, embodiments of the present invention will be illustrated below in connection with the drawing.

As shown in FIG. 1, a hotel-type non-outdoor-unit refrigeration system includes a refrigeration system and a hotel hot water supply system connected with the refrigeration system. The refrigeration system includes a compressor 2 arranged on an independent damping and noise reduction platform outside a hotel wall; the compressor 2 is filled with a refrigerant; the compressor 2 includes a refrigeration end and a heat dissipation end; the refrigeration end is connected with a radiator 1; the radiator 1 is set as an air-cooling type radiator with a fan blade structure, and the heat dissipation end is connected with a heat sink 3.

The hot water supply system includes a water tank 4, a booster pump 5, a water quality purification device and a heater 9. The heat sink 3 is arranged in the water tank 4 and soaked in water in the water tank 4. A tap water inlet pipe and a hot water outlet pipe are arranged on the water tank 4, the hot water outlet pipe is connected with the booster pump 5, and the booster pump is connected with a water inlet of the water quality purification device by a pipeline. Particularly, the water quality purification device includes a filter 7 for filtering and a purifier 8 for further purification, to-be-purified water is sequentially purified through the filter 7 and the purifier 8, the purified water is connected with the heater 9 by a water pipe, at the moment, the heater 9 is set as an electric heater, the electric heater is connected with use water outlets, and the use water outlets particularly can be set as a drinking water outlet 10 and a kitchen and bath water outlet 11. In this embodiment, as shown in FIG. 1, a water pipe three-way valve 6 is arranged at a water outlet of the booster pump 5, and the kitchen and bath water outlet 11 can be connected with the booster pump 5 without passing through the water quality purification device.

The principle of the present invention is that:
The compressor 2 boosts the refrigerant from a low pressure to a high pressure, the refrigerant constantly and circularly flows in the compressor 2, the heat sink 3 and the radiator 1 and is subjected to form transformation, and the refrigerant is subjected to form changing from a liquid state to a gas state and absorbs heat so as to take away heat in the air around the radiator 1. The refrigerant is changed into the liquid state from the gas liquid, heat is dissipated into the water tank 4, and water has a very large specific heat capacity and an excellent heat-conducting property and can store a great amount of heat, so that the system constantly transfer the absorbed heat to the hotel hot water system, and a user can select to continue to carry out filtering purification and heating on the water, thereby effectively utilizing heat discharged from a room. The water can be directly drunk after being treated by the filter and the purifier; optionally, the water can also be boiled by using the heater for drinking; optionally, the water can also be heated for a bath; and optionally, the water can also be used for washing vegetables and cooking or used for other purposes.

The characteristic of no outdoor unit of this set of refrigeration system ensures no damage to the environment, the compressor is high in refrigeration reliability, and in a mode of joining into the hotel engineering, the indoor space is reasonably utilized, and occupation for the indoor space is reduced. By joining up a water treatment system, indoor heat can be sufficiently utilized, thereby effectively utilizing resources, saving energy, reducing emission and meeting requirements of users for water.

The above-mentioned embodiments of the present invention do not constitute limitation to the scope of the present invention. Any modifications, equivalent replacements, improvements and the like made within the spirit and the principle of the present invention shall fall within the scope of the claims of the present invention.

## Claims

1. A hotel-type non-outdoor-unit refrigeration system, **characterized by** comprising: a refrigeration system and a hotel hot water supply system connected with the refrigeration system, wherein the refrigeration system includes a compressor, the compressor includes a refrigeration end and a heat dissipation end, the refrigeration end is connected with a radiator, and the heat dissipation end is connected with a heat sink; and the hot water supply system includes a water tank, a booster pump, a water quality purification device and a heater, the heat sink is arranged in the water tank and soaked in water in the water tank, a tap water inlet pipe and a hot water outlet pipe are arranged on the water tank, the hot water outlet pipe is connected with the booster pump, the booster pump is connected with a water inlet of the water quality purification device by a pipeline, a water outlet of the water quality purification device is connected with the heater, and the heater is connected with use water outlets.

2. The hotel-type non-outdoor-unit refrigeration system according to claim 1, **characterized in that**, the radiator is set as an air-cooling type radiator.

3. The hotel-type non-outdoor-unit refrigeration system according to claim 1, **characterized in that**, the water quality purification device includes a filter and a purifier which are independently arranged and are connected by pipelines.

4. The hotel-type non-outdoor-unit refrigeration system according to claim 1, **characterized in that**, the heater is set as an electric heater.

5. The hotel-type non-outdoor-unit refrigeration system according to claim 1, **characterized in that**, the use water outlets include a drinking water outlet and a kitchen and bath water outlet, and the kitchen and bath water outlet can be directly connected with a water outlet of the booster pump by the heater.
